# EUROPÄISCHE PATENTSCHRIFT

(11) **EP 1 115 530 B1**
(45) Veröffentlichungstag und Bekanntmachung des Hinweises auf die Patenterteilung: **12.11.2003**
(21) Anmeldenummer: 99941578.9
(22) Anmeldetag: 12.08.1999
(51) Int. Cl.: B23K 26/00

(54) **SCHWELLER-FAHRZEUGBODEN- UND RADHAUS-VERBUNDKAROSSERIETEILE AUS STAHL UND LEICHTMETALLEN**
SIDE-SILL AND WHEEL-HOUSE COMPOSITE PARTS FOR VEHICLES MADE OF STEEL AND LIGHT METALS
LONGERON LATERAL ET PASSAGE DE ROUE POUR L'AUTOMOBILE CONSTITUES EN ACIER ET EN ALLIAGES LEGERS

(30) Priorität: 24.09.1998 DE 19843824
(43) Veröffentlichungstag der Anmeldung: 18.07.2001
(73) Patentinhaber: Volkswagen Aktiengesellschaft, 38436 Wolfsburg (DE)
(72) Erfinder: HILLMANN, Jürgen, D-38518 Gifhorn (DE); RADSCHEIT, Carolin, D-38112 Braunschweig (DE)
(86) Internationale Anmeldenummer: EP9905851
(87) Internationale Veröffentlichungsnummer: WO00016942

(56) Entgegenhaltungen:
- EP-A- 0 333 966
- EP-A- 0 736 357
- WO-A-98/14301
- DE-A- 3 827 297
- PATENT ABSTRACTS OF JAPAN vol. 016, no. 299 (M-1274), 2. Juli 1992 (1992-07-02) & JP 04 081288 A (KOBE STEEL LTD), 13. März 1992 (1992-03-13)
- 'Laser beam joining of material combinations for automotive applications', by E. SCHUBERT, I. ZERNER and G. SEPOLD, Konferenzband LASER 97, München, 1997, seiten 212-221
- 'Laserstrahlfügen von Aluminium mit Stahl', von I. ZERNER, E. SCHUBERT und G. SEPOLD, Tagungsreihe Dünnblechverarbeitung, in Erding 24-25 März 1998, Schweisstechnische Lehr und Versuchanstalt SLV München, 1998, Seiten 221-230

## Beschreibung

Die Erfindung bezieht sich auf ein Schweller-Fahrzeugboden-Verbundkarosserieteil sowie ein Radhaus-Verbundkarosserieteil aus zwei Stahlelementen und einem großflächigen Leichtmetallelement.

Bei der Herstellung von Fahrzeugkarosserien finden verstärkt Werkstoffe und Werkstoffkombinationen Verwendung, die eine exakte Abstimmung der Werkstoffeigenschaften in einem Bauteil in Abhängigkeit von Einsatzbedingungen und Einbauverhältnissen erlauben. Bisher werden hierzu Bauteile aus Blechen oder dünnwandigen Profilen eingesetzt, mit denen aus einer Vielzahl von einzelnen Teilen durch vorwiegend thermische Fügeverfahren z.B. die Karosserie eines Fahrzeuges hergestellt wird.

Zunehmend kommen auch Werkstoffe aus Leichtmetallen oder Leichtmetallegierungen zum Einsatz, aus denen die Karosserieaußenhaut oder auch tragende Bauteile von Kraftfahrzeugen bis hin zu vollständig aus Leichtmetall bestehenden Karosserien hergestellt werden. Derartige Leichtmetalle sind überwiegend Aluminium und in verstärktem Maße auch Magnesium, die beide hinsichtlich ihrer Verfügbarkeit, verarbeitungstechnisch und bezüglich der Werkstoffkennwerte besonders günstig sind.

Derartige Leichtmetalle können jedoch nicht in allen Bereichen einer Karosseriestruktur eingesetzt werden, da die Festigkeit des Leichtmetalls für bestimmte Belastungen nicht ausreichend ist oder die Verwendung von ausschließlich aus Leichtmetallen gefertigten Karosseriebauteilen in der Großserie durch zum konventionellem Stahlblechbau unterschiedliche Fertigungstechnologien Probleme bereitet. Die mit den Leichtmetallbauteilen zu erreichenden Gewichtseinsparungen, die sich direkt auf die Wirtschaftlichkeit beim Betrieb eines derart gebildeten Fahrzeuges auswirken, wiegen die Nachteile der komplizierteren Fertigung dabei nicht auf.

Aus der EP 0 736 357 A1 ist bekannt, ein Verbund-Karosserieteil aus Stahl und Leichtmetallen oder deren Legierungen herzustellen, die in hoch beanspruchten Bereichen oder in Bereichen zum mechanischen Anschluß an konventionell in Stahl gebildete Bauteile Stahl als Konstruktionswerkstoff aufweisen, in nicht so hoch beanspruchten und dabei vorzugsweise großflächigen Teilen wie z.B. Verkleidungsteilen oder dgl. jedoch Leichtmetalle als Konstruktionswerkstoff verwenden. Hierbei werden im wesentlichen ebene, vorgefertigte Platinen mit nur geringen Raumkrümmungen verwendet, die mit ihren Kanten auf Stoß zu den Stahlbauteilen positioniert und mittels einer Quelle hochdichter Energieabstrahlung miteinander verschweißt werden. Eine derartige Gestaltung bietet den Vorteil einer flächenbündigen Gestaltung der Schweißnaht, ist jedoch hinsichtlich der Schweißdurchführung sowie der Festigkeitseigenschaften der Schweißnaht problematisch.

Weiterhin aus der deutschen Veröffentlichung "Laserstrahlfügen von Aluminium mit Stahl" von Carolin R. Radscheit, erschienen als Band 4 in der Reihe "Strahltechnik" des BIAS, Bremen, bekannt, zum Schweißen von Stahl mit Aluminium Laser einzusetzen, mit denen besonders hochwertige Schweißnähte zwischen Stahlbauteilen und Aluminiumbauteilen hergestellt werden können. Dies ermöglicht auch bei dünnen Blechen aus Aluminium und Stahl, wie sie im Automobilbau eingesetzt werden, eine bisher mit konventionellen Verfahren nicht herstellbare Dichtnaht zu erzeugen.

In der Veröffentlichung "Laser beam joining of material combinations for automotive applications " von E. Schubert et al in Konferenzband LASER 97, München, 1997, Seiten 212 bis 221, die als nächsliegeder Stand der Technik angesehen wird, wird die Problematik des Schweißens von dünnen Blechen aus Stahl und Aluminium im Überlappstoß erläutert, die einer praktischen Verbreitung dieser Technik bisher im Wege stand. Zudem werden Methoden vorgeschlagen, welche dieses Problem beseitigen.

Die Aufgabe der vorliegenden Erfindung besteht davin festigkeits gerachte, sowie fertigungstechnisch günstige Gestaltungen von Staht/Leichtmetallverbindungen für den Automobiban vorzuschlagen.

Diese Aufgabe wird durch ein Schweller-Fahrzeugboden-Verbundkarosserieteil mit den Merkmalen des Patentanspruches 1 sowie durch ein Radhaus-Verbundkarosserieteil mit den Merkmalen des Patentanspruches 3 gelöst. Beide Lösungen stellen dabei jeweils eine Kombination aus drei in vorteilhafter Weise zueinander angeordneten Elementen dar.

Bevorzugte Ausgestaltungen sind in den weiteren Patentansprüchen angegeben.

Bei den erfindungsgemäßen Verbundkarosserieteilen ist im Randbereich des Leichtmetallelementes mindestens ein Verbindungsbereich zu dem Stahlelement gebildet, der in der Montagelage die zugeordneten Bereiche des Stahlelementes flanschartig zumindest abschnittsweise flächig überlappt. Dabei sind das Leichtmetallelement und Stahlelement an dem flanschartig überlappenden Bereich mittels Laserstrahlfügen direkt aneinander festgelegt.

Hierbei wird vor allem durch die zwischen dem Stahlelement und dem Leichtmetallelement angeordneten, einander flanschartig zumindest abschnittsweise flächig überlappenden Bereiche zum einen für eine gute Positionierung von Stahlelement und Leichtmetallelement zueinander gesorgt, wodurch sich ein nur geringer Spaftabstand bzw. eine über große Abschnitte des flanschartig überlappenden Bereiches sich einstellende Berührung zwischen den Fügepartnem ergibt. Durch die möglichen hohen Vorschubgeschwindigkeiten bei der Laserstrahlbearbeitung wird beim Fügen eine die Verbindung besonders schädlich beeinflussende intermetallische Phase vermieden, so daß Stahlelement und Leichtmetallelement sich besonders innig in diesem überlappendem Bereich miteinander verbinden. Zum anderen werden durch diesen überlappenden Bereich auch die Prozeßparameter beim Schweißen, insbesondere beim Laserstrahlschweißen besonders günstig beeinflußt, da anders als bei den bekannten Schweißverfahren bei Stoßnähten keine ständig wechselnden Abstände der beiden zu verbindenden Abschnitte von Stahlelement und Leichtmetallelement vorliegen. Das Leichtmetallelement bildet im Verbund von Leichtmetallelement und Stahlelement ein Bauteil im wesentlichen ohne oder mit nur geringer Festigkeitsfunktion, wohingegen der Anschluß an benachbarte Bauteile vorteilhafterweise durch das Stahlelement vorgenommen wird, das in einer weiteren Ausgestaltung in einem Bereich des Verbund-Karosserieteiles angeordnet ist, der zur Verbindung mit weiteren angrenzenden Karosseriebauteilen vorgesehen ist. Somit ergibt sich eine Aufgabenteilung zwischen zum Beispiel großflächiger Überdeckung von Karosserieabschnitten durch das Leichtmetallelement und einer festigkeitsgerechten, nur an den tatsächlich hochbelasteten Bereichen vorliegenden Verstärkung des Verbund-Karosserieteiles durch das Stahlelement.

Das Stahlelement wird im Randbereich mit einem angrenzenden Karosseriebauteil verschweißt, wodurch das Verbund-Karosserieteil mit den Fertigungsverfahren des herkömmlichen Stahl-Karosseriebaus in der Automobilfertigung unproblematisch verarbeitet werden kann. Es sind daher keine besonderen Fertigungseinrichtungen oder dergleichen notwendig, um das erfindungsgemäße Verbund-Karosserieteil beispielsweise in die Fertigung von anderen Bereichen der Karosserie einzubinden.

Von besonderem Vorteil ist es, daß das Fügen von Stahlelement und Leichtmetallelement in der Endmontage vorgelagerten Fertigungsabschnitten durchgeführt werden kann, wodurch lediglich dort spezielle Einrichtungen zum Verarbeiten von Leichtmetallelementen wie z.B. Laserstrahlfügen, Laserstrahlschweißen etc. vorgesehen werden müssen und die sonstige Fertigung unverändert weitergeführt werden kann.

Nachfolgend wir die Erfindung anhand von in der Zeichnung dargestellten Ausführungsbeispielen näher erläutert. Die Zeichnung zeigt:
- Figur 1: ein Ausführungsbeispiel für Schweller-Fahrzeugboden-Verbundkarosserieteil nach der Erfindung, und in
- Figur 2: ein Ausführungsbeispiel für Radhaus-Verbundkarosserieteil nach der Erfindung.

Die Figuren zeigen in prinzipienhafter Darstellung typische Anwendungsfälle erfindungsgemäßer Verbund-Karosserieteile in stark vereinfachter Darstellung, wobei jeweils unterschiedliche Ausbildungen eines Leichtmetallelements 1 und eines Stahlelements 2 dargestellt sind, die in einem als Fügezone zu nutzenden Überlappungsbereich 3 einander flächig überlappend überdecken und durch Laserschweißen miteinander verbunden werden können. Gleiche Sachnummem bezeichnen hierbei gleiche Funktionen und Bauelemente, so daß bei den folgenden Figuren jeweils nur auf den Einsatzfall abgestellt werden soll.

Den Ausführungsformen ist gemeinsam, daß durch entsprechende Formgebung des Leichtmetallelements 1 und des Stahlelements 2 für das Fügen mittels Laserschweißen ein Überlappungsbereich 3 gebildet wird, in dem das Leichtmetallelement 1 und das Stahlelement 2 im wesentlichen einander flächig überlappend aufeinanderliegen und nur geringen oder gar keinen Abstand zueinander haben. Hierdurch bildet sich eine für das Schweißen besonders gute Spaltausbildung zwischen dem Leichtmetallelement 1 und dem Stahlelement 2, so daß die herstellbare Schweißverbindung insbesondere auch durch entstehende intermetallische Phasen eine besonders gute Festigkeit aufweist, ohne daß benachbarte Bereiche durch das Laserschweißen in ihrer mechanischen Eigenschaften verändert werden.

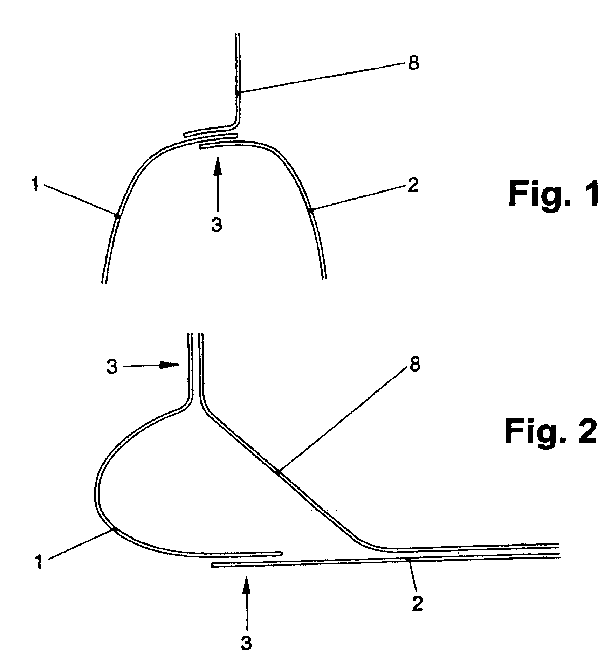

In der Figur 1 ist eine Ausführungsform dargestellt, bei der die üblicherweise aus Stahl bestehenden Seitenteile 8 bzw. der aus Stahl bestehende Stahlboden des Fahrzeugrahmens im Bereich der Schweller durch einen als Leichtmetallelement 1 ausgeführten Schweller nach außen seitlich verkleidet sind. Wiederum ist oberseitig des Leichtmetallelementes 1 im Überlappungsbereich 3 das Leichtmetallelement 1 mit dem Seitenteil 8 und unterhalb des Schwellers mit dem als Stahlboden ausgeführten Stahlelement 2 verbunden.

In der Figur 2 ist in einem Schnitt die Gestattung eines Radhauses dargestellt, bei dem ein Stahlelement 2 als innere Hälfte des Radhauses aus Stahl gebildet ist und mit einem als Leichtmetallelement 1 vorgesehenen äußeren Radhausteil im Überlappungsbereich 3 verbunden und mit dem Seitenteil 8 gegebenenfalls ebenfalls verschweißt dargestellt ist. Hierdurch lassen sich deutliche Gewichtsreduzierungen bei Karosserieteilen wie einem Radhaus oder dergleichen erreichen, da Innen- bzw. Außenteil des Radhauses nur geringen mechanischen Belastungen unterliegen.

## Patentansprüche

1. Schweller-Fahrzeugboden-Verbundkarosserieteil, umfassend:
einen als Stahlelement (2) ausgebildeten Fahrzeugboden,
ein als Stahlelement ausgebildetes Seitenteil (8), das mit dem Fahrzeugboden verbunden ist, und
ein als großflächiges Leichtmetallelement (1) mit im wesentlichen keiner oder nur geringer Festigkeitsfunktion ausgeführtes Schweller-Außenblech zur äußeren seitlichen Verkleidung, das an einem oberen Randbereich einen Verbindungsbereich (3) zu dem Seitenteil-Stahlelement (8) und an einem unteren Randbereich einen Verbindungsbereich (3) zu dem Fahrzeugboden-Stahlelement (2) ausbildet,
wobei der jeweilige Verbindungsbereich (3) des Leichtmetallelementes (1) in der Montagelage zugeordnete Bereiche des Stahlelementes (2, 8) flanschartig überlappt, das Leichtmetallelement (1) und das Stahlelement (2, 8) sich in dem flanschartig überlappenden Bereich im wesentlichen flächig berühren, und das Leichtmetallelement (1) und das Stahlelement (2, 8) in dem flanschartig überlappenden, sich flächig berührenden Bereich durch Laserstrahlschweißen direkt miteinander gefügt sind.

2. Schweller-Fahrzeugboden-Verbund-Karosserieteil nach Anspruch 1, **dadurch gekennzeichnet, daß** dieses derart konfiguriert ist, daß das Verschweißen des Stahlelementes (2) mit dem Leichtmetallelement (1) in einem der Endmontage vorgelagerten Fertigungsabschnitt durchführbar ist.

3. Radhaus-Verbundkarosserieteil umfassend:
ein als Stahlelement ausgebildetes Karosseriebauteil (8),
ein Radhaus-Innenteil und Radhaus-Außenteil zur Verbindung mit dem angrenzenden Karosseriebauteil (8), von denen eines als ein großflächiges Leichtmetallelement (1) mit im wesentlichen keiner oder nur geringer Festigkeitsfunktion ausgebildet ist und das andere als Stahlelement (2) ausgebildet ist,
wobei das Leichtmetallelement (1) an einem Randbereich mindestens einen Verbindungsbereich (3) zu dem Stahlelement (2) ausbildet und das Stahlelement (2) in einem Bereich des Verbund-Karosserieteiles angeordnet ist, der zur Verbindung mit weiteren angrenzenden Karosseriebauteilen (8) vorgesehen ist,
wobei der Verbindungsbereich (3) des Leichtmetallelementes (1) in der Montagelage zugeordnete Bereiche des Stahlelementes (2) flanschartig überlappt, das Leichtmetallelement (1) und das Stahlelement (2) sich in dem flanschartig überlappenden Bereich im wesentlichen flächig berühren, und das Leichtmetallelement (1) und das Stahlelement (2) in dem flanschartig überlappenden, sich flächig berührenden Bereich durch Laserstrahlschweißen direkt miteinander gefügt sind.

4. Radhaus Verbund-Karosserieteil nach Anspruch 1, **dadurch gekennzeichnet, daß** dieses derart konfiguriert ist, daß das Verschweißen des Stahlelementes (2) mit dem Leichtmetallelement (1) in einem der Endmontage vorgelagerten Fertigungsabschnitt durchführbar ist.

## Claims

1. Composite sill/vehicle-floor body part, comprising:
a vehicle floor designed as a steel element (2),
a side part (8) which is designed as a steel element and is connected to the vehicle floor, and
a sill outer panel which is designed as a large-area light-metal element (1) with essentially no or only a minor strength function and is intended for outer lateral covering and which forms, at an upper edge region, a region of connection (3) to the steel side-part element (8) and, at a lower edge region, a region of connection (3) to the steel vehicle-floor element (2),
the respective region of connection (3) of the light-metal element (1) overlapping in a flange-like manner those regions of the steel element (2, 8) which are assigned to one another in the assembly position, the light-metal element (1) and the steel element (2, 8) being essentially in surface contact with one another in the region overlapping in a flange-like manner, and the light-metal element (1) and the steel element (2, 8) being joined directly to one another by laser-beam welding in the region overlapping in a flange-like manner where there is mutual surface contact.

2. Composite sill/vehicle-floor body part according to Claim 1, **characterized in that** this is configured in such a way that the welding of the steel element (2) to the light-metal element (1) can be carried out in a manufacturing stage preceding the final assembly.

3. Composite wheel-arch body part comprising:
a structural body part (8) designed as a steel element,
a wheel-arch inner part and wheel-arch outer part for connection to the adjacent structural body part (8), of which one is designed as a large-area light-metal element (1) with essentially no or only a minor strength function and the other is designed as a steel element (2),
the light-metal element (1) forming, at one edge region, at least one region of connection (3) to the steel element (2), and the steel element (2) being arranged in a region of the composite body part which is provided for connection to further adjacent structural body parts (8), the region of connection (3) of the light-metal element (1) overlapping in a flange-like manner regions of the steel element (2) which are assigned to one another in the assembly position, the light-metal element (1) and the steel element (2) being essentially in surface contact with one another in the region overlapping in a flange-like manner, and the light-metal element (1) and the steel element (2) being joined directly to one another by laser-beam welding in the region overlapping in a flange-like manner where there is mutual surface contact.

4. Composite wheel-arch body part according to Claim 1, **characterized in that** this is configured in such a way that the welding of the steel element (2) to the light-metal element (1) can be carried out in a manufacturing stage preceding the final assembly.

## Revendications

1. Pièce composite de carrosserie de bas de marche et de plancher de véhicule, comprenant :
un plancher de véhicule réalisé sous la forme d'un élément en acier (2),
une partie latérale (8) réalisée sous la forme d'un élément en acier qui est connectée au plancher du véhicule, et
une tôle extérieure de bas de marche réalisée sous la forme d'un élément en métal léger de grande surface (1) avec essentiellement aucune fonction ou une fonction très réduite de solidité, allant vers l'habillage latéral extérieur, qui forme, au niveau d'une région de bord supérieure, une région de liaison (3) avec l'élément en acier de partie latérale (8) et au niveau d'une région de bord inférieure, une région de liaison (3) avec l'élément en acier de plancher de véhicule (2),
la région de liaison respective (3) de l'élément en métal léger (1) recouvrant à la manière d'une bride, dans la position de montage, des régions associées de l'élément en acier (2, 8), l'élément en métal léger (1) et l'élément en acier (2, 8) venant en contact essentiellement face contre face dans la région de recouvrement de type bride, et l'élément en métal léger (1) et l'élément en acier (2, 8) étant joints directement l'un à l'autre par soudage au faisceau laser dans la région de contact face contre face, de recouvrement de type bride.

2. Pièce composite de carrosserie de bas de marche et de plancher de véhicule selon la revendication 1, **caractérisée en ce que** celle-ci est configurée de telle sorte que le soudage de l'élément en acier (2) peut être réalisé avec l'élément en métal léger (1) dans une partie de fabrication prémontée avant le montage final.

3. Pièce composite de carrosserie de passage de roue, comprenant :
un composant de carrosserie (8) réalisé sous la forme d'un élément en acier,
une partie interne de passage de roue et une partie externe de passage de roue destinées à être connectées au composant de carrosserie adjacent (8), dont l'une est réalisée sous la forme d'un élément en métal léger de grande surface (1) avec essentiellement aucune fonction ou une fonction très réduite de solidité et l'autre est réalisé en tant qu'élément en acier (2),
l'élément en métal léger (1) formant, au niveau d'une région de bord, au moins une région de liaison (3) avec l'élément en acier (2) et l'élément en acier (2) étant disposé dans une région de la pièce de carrosserie composite, qui est pourvue, en vue de la liaison, d'autres composants de carrosserie adjacents (8), la région de liaison (3) de l'élément en métal léger (1) recouvrant à la manière d'une bride, dans la position de montage, des régions associées de l'élément en acier (2), l'élément en métal léger (1) et l'élément en acier (2) venant en contact essentiellement face contre face dans la région de recouvrement de type bride, et l'élément en métal léger (1) et l'élément en acier (2) étant joints directement l'un à l'autre par soudage au faisceau laser dans la région de contact face contre face, de recouvrement de type bride.

4. Pièce composite de carrosserie de passage de roue, **caractérisés en ce que** celle-ci est configurée de telle sorte que le soudage de l'élément en acier (2) à l'élément en métal léger (1) puisse être réalisé dans une partie de fabrication prémontée avant le montage final.
